# EUROPEAN PATENT SPECIFICATION

(11) **EP 0 579 951 B1**
(45) Date of publication and mention of the grant of the patent: **09.09.1998**
(21) Application number: 93109572.3
(22) Date of filing: 16.06.1993
(51) Int. Cl.: A01N 25/26

(54) **Pesticidal composition**
Pestizide Zusammensetzung
Composition pesticide

(30) Priority: 23.07.1992 JP 197228/92
(43) Date of publication of application: 26.01.1994
(73) Proprietor: RIKAGAKU KENKYUSHO, Wako-shi Saitama-ken (JP)
(72) Inventor: Homma, Yasuo, c/o Rikagaku Kenkyusho, Wako-shi, Saitama-ken (JP); Arimoto, Yutaka, c/o Rikagaku Kenkyusho, Wako-shi, Saitama-ken (JP)
(74) Representative: Werner, Hans-Karsten, Dr.Dipl.-Chem.

(56) References cited:
- DE-A- 2 927 994
- FR-A- 2 623 973
- GB-A- 2 002 319
- Kirk-Othmer "Encyclopedia of Chemical Technology", Third edition, Vol.16, pp778-779
- "Glossary of Chemical Terms", ed. C.A.Hampel & G.G.Hawley, 1976, p245.

## Description

### BACKGROUND OF THE INVENTION

### Field of the Invention

The present invention relates to a pesticidal composition.

More specifically, the present invention relates to a pesticidal composition which exhibits a prolonged pesticidal effect when an active pesticidal ingredient thereof is used at a low concentration.

### Description of the Related Art

Heavy metal compounds such as mercurials and arsenicals, organochlorine agents, and organophosphorus agents have been widely used as agricultural pesticides. However, all of these agents are harmful to human and animal bodies, and furthermore, their use in an effective amount leads to possible environmental pollution, such as soil contamination, which is considered as a serious social problem. For these reasons, new types of pesticides have been developed which have excellent pesticidal activity and are highly safe to the human body as well as to animals and plants. US 4,599,233 discloses fungicides comprising an aliphatic polyol ester of an aliphatic acid compound and sodium hydrogen carbonate as active ingredients. This publication teaches that the fungicides have high pesticidal activities against various diseases of plants and stored fruits and that they are very safe to humans, animals and plants. However, in order to obtain sufficient pesticidal effect, it is necessary to use the fungicides at a high concentration when they are sprayed in an amount comparable to those of ordinary pesticides. On the other hand, a large amount of application is necessary when the pesticide is used at a relatively low concentration.

United States Patent No. 5,123,950 discloses coated agricultural chemicals for eliminating such problems. These comprise a powdery effective component of an agricultural chemical coated at least with one of aliphatic acid esters of aliphatic polyols and/or phospholipids in an amount of 0.1 to 3 parts by weight per 100 parts by weight of the effective component. Although these coated agricultural chemicals are effective even at a low concentration, they are not satisfactory from the viewpoint of sustained pesticidal activity. Specifically, their prevention values decrease at an advanced stage of disease, although sufficient pesticidal effect can be achieved at the beginning of their application.

### SUMMARY OR THE INVENTION

Accordingly, an object of the present invention is to provide a pesticidal composition which can exhibit sustained pesticidal activity even at a low concentration.

The inventors conducted various studies, and as a result, found that a pesticidal composition comprising a small amount of a sizing agent in addition to a coated pesticide comprising an active pesticidal ingredient coated with 0.1 to 10 parts by weight of one or more ingredients selected from the group consisting of aliphatic acid esters of aliphatic polyols, phospholipids, or a mixture thereof based on 100 parts by weight of the active ingredient can exhibit sustained pesticidal activity at a low concentration. The present invention was achieved on the basis of these findings.

The present invention thus provides a pesticidal composition which comprises a coated pesticide comprising 100 parts by weight of an active pesticidal ingredient coated with 0.1 to 10 parts by weight of one or more ingredients selected from the group consisting of aliphatic acid esters of aliphatic polyols, phospholipids, or a mixture thereof, and 0.01 to 10 parts by weight of a sizing agent.

### DETAILED EXPLANATION OF THE PREFERRED EMBODIMENT

The coated pesticides contained in the pesticidal composition of the present invention are coated agricultural chemicals prepared by coating 100 parts by weight of an active pesticidal ingredient with 0.1 to 10 parts by weight of an aliphatic acid ester of aliphatic polyols and/or a phospholipid. The coated pesticides can be prepared by known methods such as, for example, a method described in U.S. Patent No. 5,123, 950.

The active pesticidal ingredients contained in the coated pesticide may be any pesticides such as various germicides, insecticides, and herbicides for agricultural and horticultural use, which are preferably in the form of solid powder at an ordinary temperature. Although water-soluble pesticides are preferably used, water-insoluble pesticides may also be used. Examples of the active pesticidal ingredients include, for example, commonly used pesticides such as copper 8-oxyquinoline, basic copper sulfate, basic copper chloride, copper (II) chloride, basic copper carbonate, methyl 1-(butylcarbamoyl)-2-benzimidazolecarbamate, antibiotic-polyoxine complex, O,O-diethyl-S-benzylthiophosphate, 2-sec-butylphenyl-N-methylcarbamate, and O,O-dimethyl-2,2,2-trichloro-1-hydroxyethylphosphate. In addition, water-soluble carbonates, water-soluble hydrogen carbonates, water-soluble chlorides, water-soluble phosphates, and water-soluble sulfates which are safe to animals and plants can be used. For example, water-soluble carbonates such as, for example, potassium carbonate, sodium carbonate, and ammonium carbonate; water-soluble hydrogen carbonates such as, for example, potassium hydrogen carbonate, sodium hydrogen carbonate, and ammonium hydrogen carbonate; water-soluble chlorides such as, for example, potassium chloride, sodium chloride, and magnesium chloride; water-soluble phosphate such as, for example, disodium hydrogen phosphate, sodium dihydrogen phosphate, and potassium dihydrogen phosphate; and copper (II) sulfate may be used. These active pesticidal ingredients may be used alone or two or more may be used in combination.

As aliphatic polyols which constitute the moiety of aliphatic acid esters of aliphatic polyols contained in the coated pesticides, saturated or unsaturated aliphatic polyols having 3 to 6 carbon atoms may be used. Glycerin, propylene glycol, sorbitol, and solbitan are preferable. As the aliphatic acid moiety of the aliphatic acid esters of aliphatic polyols, single component aliphatic acids such as saturated aliphatic acids having 8 to 22 carbon atoms such as, for example, caprylic acid, capric acid, lauric acid, myristic acid, palmitic acid, stearic acid, arachic acid, and behenic acid; and unsaturated aliphatic acids such as, for example, oleic acid, linolic acid, linolenic acid, and ricinoleic acid, or mixed aliphatic acids such as, for example, tallow, cottonseed oil, rapeseed oil, and hardened oil derived naturally from animal or plant sources may be used.

The aliphatic acid esters of aliphatic polyols contained in the coated pesticides are mono-, di-, or triesters prepared by ordinary esterification reactions or transesterification reactions using the above-described aliphatic polyols and the above-described aliphatic acids. Sorbitan monolaurate, sorbitan monostearate, glycerin laurate, glycerin monocaprylate, glycerin monooleate, glycerin monooctoate, glycerin mono-soyabean oil fatty acid ester, triglycerin monooleate, glycerin monopalmitate, and polyglycerin fatty acid esters may preferably used are preferably used. Other preferred examples include polyoxyethylene-alkylphenylether, polyoxyethylene-nonylphenylether, and lauryl dihydroxyethylamine. These aliphatic acid esters of aliphatic polyols may be used alone or two or more of them may be used in combination. As the phospholipids contained in the coated pesticides, phytolecithins separated from plant oils or egg yolk lecithin; and phosphatidylcholine, phosphatidyl-ethanolamine, and phosphatidylinositol separated therefrom may be used. Among the foregoing, purified lecithin or phosphatidylethanolamine, and phosphatidylinositol are preferred. These phospholipids may be used alone or two or more of them may be used in combination.

The process for coating the above-described active pesticidal ingredients with the above-described aliphatic acid esters of aliphatic polyols may be carried out by, for example, the method described in U.S. Patent No. 5,123,950. Examples of such method include, for example, a method comprising the steps of dissolving an aliphatic acid ester of aliphatic polyol and/or a phospholipid in acetone, and adding and mixing a powdery active pesticidal ingredient with the resulting solution, and then evaporating the solvent. The content ratio of the aliphatic acid ester of aliphatic polyol and/or the phospholipid based on the active pesticidal ingredient is preferably 0.1 to 10 parts by weight, more preferably 0.5 to 5 parts by weight, of the aliphatic acid ester of aliphatic polyol and/or the phospholipid based on 100 parts by weight of the active pesticidal ingredient. If the content ratio of the aliphatic acid ester of aliphatic polyol and/or the phospholipid is lower than 0.1 part by weight based on the weight of the active pesticidal ingredient, an emulsion of the active pesticidal ingredient will not be effectively obtained where the pesticidal composition of the present invention is used after diluted with water. If the content ratio of the aliphatic acid ester of aliphatic polyol and/or the phospholipid is higher than 10 parts by weight based on the weight of the active pesticidal ingredient, a coating layer cannot be maintained because of the separation of the aliphatic acid ester of aliphatic polyol and/or the phospholipid, so that an emulsion of the pesticidal composition of the present invention cannot be obtained effectively. The coated pesticides contained in the pesticidal composition of the present invention are generally prepared in the form of powder. Active pesticidal ingredients having a particle size of 100 mesh pass are preferably used, since a coating layer cannot be maintained on particles having too large particle sizes. On the other hand, it is preferable to use active pesticidal ingredients which cannot pass a 400 mesh sieve, since the desired concentration cannot be obtained in the preparation of the coated pesticide where the particles are too small. In general, the coated pesticides are prepared to have a particle size of 100 mesh pass, preferably about 200-400 mesh.

The pesticidal composition of the present invention is characterized in that it contains 0.01-10 parts per weight of a sizing agent together with the above-described coated pesticide. The sizing agent in the form of powder may be mixed with the above-described coated pesticide formulated in the form of powder, or alternatively, the sizing agent may constitute an additional outside coating layer on the coating layer comprising the aliphatic acid ester of aliphatic polyol and/or the phospholipid. Examples of the preparation process of the pesticidal composition of the present invention include, for example, a process of mixing a powdery sizing agent with the powdery coated pesticide; a process of adding the coated pesticide to a solution containing a sizing agent and then evaporating the solvent; and a process comprising the steps of suspending the coated pesticide in a solvent, adding a sizing agent to the resulting suspension, and then evaporating the solvent. As the sizing agent, carboxymethylcellulose (CMC), polyvinylalcohol (PVA), alginic acid, sodium alginate, sodium polyacrylate, sodium pyrophosphate, esters of polyacrylic acid, sodium polyphosphate, potassium polyphosphate, and sodium metaphosphate may be used. Among the foregoing, CMC is preferably used.

Where the sizing agents in the form of powder are used, 0.01 to 10 parts by weight of powdery sizing agent is mixed with the coated pesticide to prepare the pesticidal composition of the present invention. In this case, powdery sizing agent having a particle size of 325 mesh pass can be added and mixed with the coated pesticide having a particle size of 100 mesh pass, preferably about 200 to 400 mesh pass, in the ratio of 0.01 to 10 parts by weight based on 100 parts by weight of active pesticidal ingredient. Alternatively, the pesticidal composition of the present invention in which the sizing agent is coated on the outside of the coated pesticide can be prepared by adding the coated pesticide to the solution prepared by dissolving the sizing agent in water or an organic solvent, and then evaporating the solvent. Where the sizing agent is rather insoluble in water, organic solvents which can dissolve the sizing agent are preferably used. Preferably, these organic solvents do not substantially affect the coating layer of the aliphatic acid ester of aliphatic polyol and/or the phospholipid during the coating with the sizing agent. Such solvents can appropriately be chosen by one of ordinary skill in the art and examples thereof include ethanol and methanol. Furthermore, the pesticidal composition of the present invention can be prepared by dissolving the sizing agent in a suspension prepared by suspending the coated pesticide in water or an organic solvent, and then evaporating the solvent. As the solvent, there may be chosen one that can dissolve the sizing agent and but does not substantially affect the coating layer of the aliphatic acid ester of aliphatic polyol and/or the phospholipid during the coating process with the sizing agent. For example, water, methanol, or ethanol may be used.

The pesticidal composition of the present invention may be formulated by optionally adding commonly used auxiliary agents such as spreading agents, wetting and spreading agents, fixing agents and surfactants. These auxiliary agents in the form of powder may be added to the pesticidal composition of the present invention, or alternatively, they may be contained in the coated pesticide or the coating of the sizing agent. The concentrations for spraying the pesticidal composition of the present invention are not limited since they may vary depending on the sort of active ingredient. For example, they may be used at about 1 to 500 ppm.

The present invention also provides a method for applying a pesticide comprising the step of adding 0.01 to 10 parts by weight of a sizing agent to the coated pesticide prepared by the method described above, and spraying the resulting mixture. For example, where the coated pesticide is used as a wettable powder, the process may comprise the steps of dissolving the above-described sizing agent in the aqueous preparation of the coated pesticide having a concentration of about 100 to 1000 ppm so that the content ratio of the sizing agent is 0.01 to 10 parts by weight based on 100 parts by weight of the active pesticidal ingredient, and spraying the resulting mixture. While the invention is not bound by any theory, it is thought that when a spray application is carried out according to the present invention, a highly concentrated solution of an active pesticide is kept in a capsule formed by the aliphatic acid ester of aliphatic polyol and/or the phospholipid since the sizing agent and the active pesticidal ingredient contained in the coated pesticide are readily dissolved in water while the aliphatic acid ester of aliphatic polyol and/or the phospholipid are water-insoluble. On the other hand, the outside of the capsule is contacted with dissolved sizing agent, and as a consequence, the capsule containing the highly concentrated pesticidal solution will readily adhere to pathogenic microorganisms or injurious insects and exhibit sustained bactericidal and insecticidal effects. Where the spray application is carried out using the pesticidal compositions of the present invention added with water, they can exhibit sustained bactericidal and insecticidal effect in a similar manner even at a low concentration.

### EXAMPLES

The present invention will be hereinafter explained more specifically by way of examples. However, the present invention is not be limited to these examples.

### Example 1

Diglycerin laurate (2 g) was dissolved in 100 ml of acetone. To the resulting solution, 100 g of finely powdered sodium hydrogen carbonate (90% 100 mesh pass) was added. After vigorous stirring, the solvent was thoroughly removed using a rotary evaporator. To the resulting powder, 0.05 g of carboxymethylcellulose (CMC) was added and mixed as the sizing agent to give a powdery water soluble concentrate having good fluidity.

### Example 2

Glycerin monocaprylate (4 g) was dissolved in 100 ml of acetone. To the resulting solution, 100 g of finely powdered sodium hydrogen carbonate (90% 100 mesh pass) was added. After vigorous stirring, the solvent was thoroughly removed using a rotary evaporator. To the resulting powder, 0.02 g of car boxymethylcellulose (CMC) was added and mixed as the sizing agent to give a powdery water soluble concentrate having good fluidity.

### Example 3

Glycerin monolaurate (2 g) and sorbitan stearate (2 g) were dissolved in 100 ml of ethanol. To the resulting solution, 100 g of finely powdered sodium chloride (90% 100 mesh pass) was added. After vigorous stirring, the solvent was thoroughly removed using a rotary evaporator. To the resulting powder, 0.1 g of carboxymethylcellulose (CMC) was added and mixed as the sizing agent to give a powdery water soluble concentrate having good fluidity.

### Example 4

Glycerin monocaprylate (2 g) and diglycerin laurate (2 g) were dissolved in 100 ml of ethanol. To the resulting solution, 100 g of finely powdered potassium hydrogen carbonate (90% 100 mesh pass) was added. After vigorous stirring, the solvent was thoroughly removed using a rotary evaporator. To the resulting powder, 0.05 g of sodium polyacrylate was added and mixed as the sizing agent to give powdery water soluble concentrate having good fluidity.

### Example 5

Glycerin monolaurate (4 g) and diglycerin oleate (2 g) were dissolved in 10 ml of acetone and 5 ml of methanol, respectively. To the solution of glycerin monolaurate, 100 g of finely powdered potassium carbonate (90% 100 mesh pass) was added and the mixture was hot-air dried after vigorous stirring. The solution of diglycerin oleate was added to the result and vigorously stirred, and the solvent was then thoroughly removed by hot-air drying. To the resulting powder, 0.08 g of sodium polyacrylate was added and mixed as the sizing agent to give a powdery water soluble concentrate having good fluidity.

### Example 6

Glycerin monooleate (2 g) and diglycerin oleate (2 g) were dissolved in 50 ml of acetone and 50 ml of methanol, respectively. To the solution of glycerin monooleate, 100 g of finely powdered ammonium hydrogen carbonate (90% 100 mesh pass) was added. After vigorous stirring, the solvent was thoroughly removed using a rotary evaporator. The solution of diglycerin oleate was added to the result and vigorously stirred, and the solvent was then thoroughly removed by hot-air drying. To the resulting powder, 0.05 g of sodium alginate was added and mixed as the sizing agent to give a powdery water soluble concentrate having good fluidity.

### Example 7

Glycerin laurate (4 g) was dissolved in 100 ml of methanol: To the resulting solution, 80 g of finely powdered ammonium carbonate (90% 100 mesh pass) was added. After vigorous stirring, the solvent was thoroughly removed using a rotary evaporator. To the resulting powder, 0.05 g of alginic acid was added and mixed as the sizing agent to give a powdery water soluble concentrate having good fluidity.

### Example 8

Diglycerin oleate (2 g) and hexaglycerin laurate (2 g) were dissolved in 50 ml of acetone and 50 ml of methanol, respectively. To the solution of diglycerin oleate, 100 g of finely powdered potassium carbonate (90% 100 mesh pass) was added and the solvent was thoroughly removed using a rotary evaporator after vigorous stirring. The solution of hexaglycerin laurate was added to the result and vigorously stirred, and the solvent was then thoroughly removed using a rotary evaporator. To the resulting powder, 0.05 g of sodium pyrophosphate was added and mixed as the sizing agent to give a powdery water soluble concentrate having good fluidity.

### Example 9

Diglycerin laurate (2 g) and decaglycerin laurate (2 g) were dissolved in 50 ml of ethanol and 50 ml of acetone, respectively. To the former solution, 100 g of finely powdered disodium phosphate (90% 100 mesh pass) was added and the solvent was thoroughly removed using a rotary evaporator after vigorous stirring. The solution of decaglycerin laurate was added to the result and vigorously stirred, and the solvent was then thoroughly removed using a rotary evaporator. To the resulting powder, 0.05 g of sodium polyphosphate was added and mixed as the sizing agent to give a powdery water soluble concentrate having good fluidity.

### Example 10

Propyleneglycol monolaurate (4 g) and sorbitan laurate (2 g) were dissolved in 100 ml of ethanol. To the resulting solution, 100 g of finely powdered monosodium phosphate (90% 100 mesh pass) was added. After vigorous stirring, the solvent was thoroughly removed using a rotary evaporator. To the resulting powder, 0.05 g of sodium polyphosphate was added and mixed as the sizing agent to give a powdery water soluble concentrate having good fluidity.

### Example 11

Diglycerin laurate (2 g) and decaglycerin laurate (2 g) were dissolved in 50 ml of ethanol and 50 ml of acetone, respectively. To the solution of diglycerin laurate, 100 g of finely powdered dipotassium phosphate (90% 100 mesh pass) was added and the solvent was thoroughly removed using a rotary evaporator after vigorous stirring. The solution of decaglycerin laurate was added to the result and vigorously stirred, and the solvent was thoroughly removed using a rotary evaporator. To the resulting powder, 0.05 g of sodium polyphosphate was added and mixed as the sizing agent to give a powdery water soluble concentrate having good fluidity.

### Example 12

Propyleneglycol monolaurate (4 g) and sorbitan laurate (2 g) were dissolved in 100 ml of ethanol. To the resulting solution, 100 g of finely powdered monopotassium phosphate (90% 100 mesh pass) was added. After vigorous stirring, the solvent was thoroughly removed using a rotary evaporator. To the resulting powder, 0.05 g of sodium polyphosphate was added and mixed as the sizing agent to give a powdery water soluble concentrate having good fluidity.

### Example 13

Glycerin monooleate (4 g) was dissolved in 100 ml of acetone. To the resulting solution, 100 g of finely powdered anhydrous copper sulfate (90% 100 mesh pass) was added. After vigorous stirring, the solvent was thoroughly removed using a rotary evaporator. To the resulting powder, 0.05 g of alginic acid was added and mixed as the sizing agent to give a powdery water soluble concentrate having good fluidity.

### Experiments 1-13

The efficacy of the pesticidal compositions of the present invention was compared with that of the coated agricultural chemicals disclosed in U.S. Patent 5,123,950 and the solutions of commonly used active ingredients. Pesticidal formulations were prepared at the concentrations of 250 ppm and 125 ppm for each pesticide. Comparison was made by calculating prevention values (%) at 3, 6, and 10 days after the application and estimating the presence or absence of phytotoxicity. In Table 1, each coated agricultural chemical comprises the same ingredients as the corresponding composition of the present invention except that each coated agricultural chemical does not contain a sizing agent. The preventive values of the 125 ppm formulations are shown in parentheses in the table, and their phytotoxicities are not shown since the same results were obtained by the formulations at the concentration of 250 ppm. The result obtained by the application of a formulation not containing an active ingredient is shown for comparison.

The results summarized in Table 1 demonstrate that the pesticidal composition of the present invention exhibits markedly higher preventive values even at low concentrations of 125 ppm and 250 ppm as compared with ordinarily used pesticidal solutions or known coated agricultural chemicals and that they achieve excellent preventive values at 6 and 10 days and have sustained pesticidal activity.

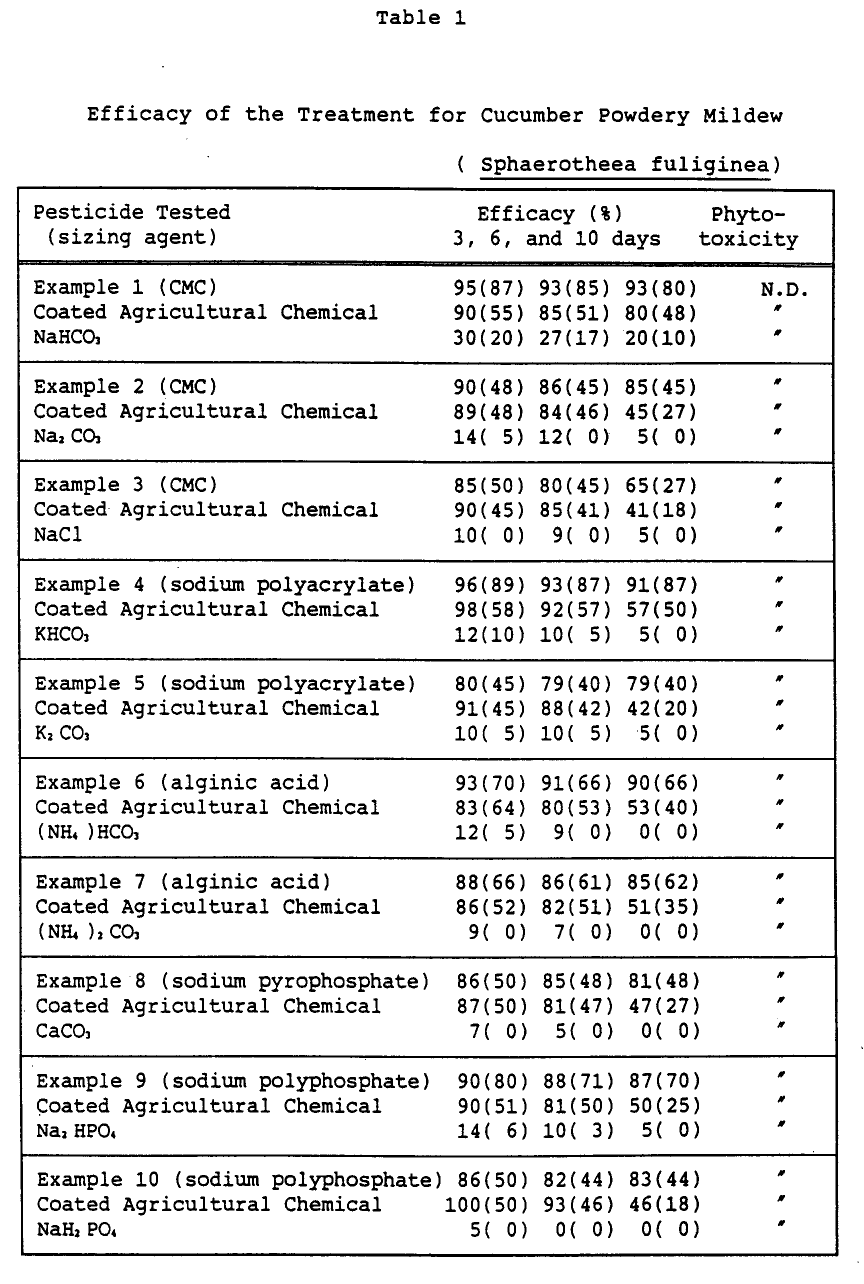

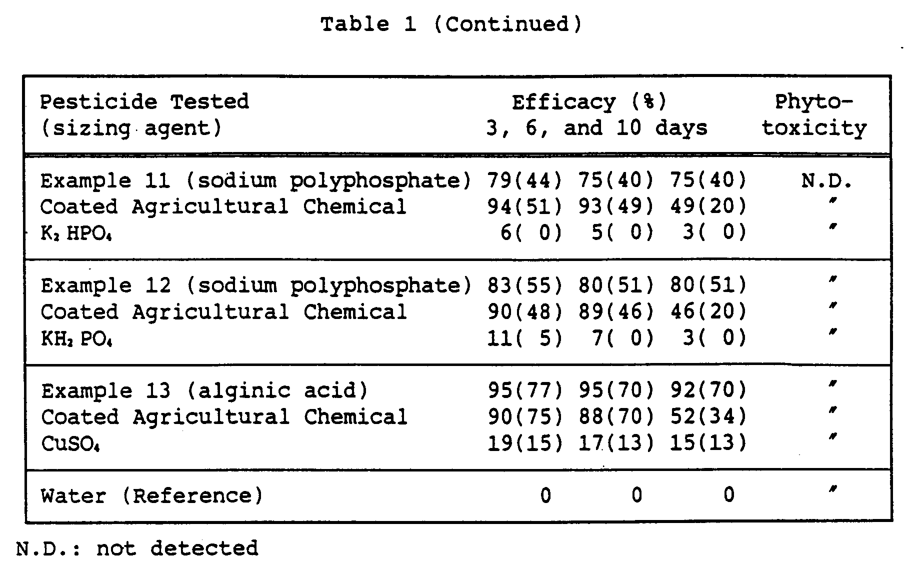

### Experiment 14

The efficacy of the treatment was studied using the compositions of the present invention in the form of water soluble concentrates, each containing a different sizing agent. Pesticidal formulations were prepared at the concentrations of 250 ppm and 125 ppm for each pesticide. Comparison was made by calculating preventive values (%) at 3, 6, and 10 days after the application and estimating the presence or absence of phytotoxicity. In Table 1, the preventive values of the 125 ppm formulations are shown in parentheses and their phytotoxicities are not shown since the same results were obtained by the formulations at the concentration of 250 ppm. The water soluble concentrate of the present invention had successful efficacy and sustained activity irrespective the sort of sizing agent contained therein. The results are summarized in Table 2.

**Table 2**

| Efficacy of the Treatment for Cucumber Powdery Mildew | | |
|---|---|---|
| Coated Pesticide/sizing agent | Efficacy (%) 3, 6, and 10 days | Phytotoxicity |
| Coated NaHCO₃ /CMC | 96(85) 96(85) 94(83) | N.D. |
| Coated NaHCO₃ /alginic acid | 95(85) 94(85) 94(82) | N.D. |
| Coated NaHCO₃ /sodium polyacrylate | 95(87) 95(86) 95(86) | N.D. |
| Coated NaHCO₃ /sodium pyrophosphate | 94(82) 93(80) 93(79) | N.D. |
| Coated NaHCO₃ /sodium polyphosphate | 93(80) 91(80) 91(77) | N.D. |
| Coated NaHCO₃ /sodium metaphosphate | 80(70) 80(69) 77(65) | N.D. |
| Coated NaHCO₃ / - | 64(51) 87(62) 50(49) | N.D. |

### Experiment 15

From a comparison in preventive values against citrus melanose in which an aqueous NaHCO₃ solution, the dilution of the coated agricultural chemical according to U.S. Patent No. 5,123,950, and the dilution of the pesticidal composition of the present invention were used at various concentrations ranging from 0 to 300 ppm, it became obvious, that the preventive value of the ordinarily used pesticidal solution was 5% even at 300 ppm, and the preventive value of the the coated agricultural chemical according to U.S. Patent No. 5,123,950 was about 60% at 250 ppm. On the other hand, the pesticidal composition of the present invention exhibited a preventive value of not lower than 80% at 125 ppm. The pesticidal composition of the present invention is obviously far more effective at low concentration than the other two pesticides.

### Experiment 16

From the results of a comparison in preventive values against petunia gray mold (Butrytis cinerea) in which an aqueous NaHCO₃ solution, the dilution of the coated agricultural chemical according to U.S. Patent No. 5,123,950, and the dilution of the pesticidal composition of the present invention were used, it is apparent that the pesticidal composition of the present invention is far more effective at low concentration than the other two pesticides.

### Experiment 17

The insecticidal activity of the solution of the pesticidal composition of the present invention was compared with those of known coated agricultural chemical according to U.S. Patent No. 5,123,950 and ordinarily used pesticidal solution. Formulations at 250 ppm and 125 ppm were prepared for each of these pesticides. Insecticidal rate (%) against Myzus persicae (green peach aphid) and miticidal rate (%) against Panonychus citri McGregor (citrus red mite) were calculated for comparison. In the inhibitory activity against Icerya purchst Maskell (cottony cushion scale) shown in Table 3, + represents effective; ++ represents highly effective; and - represents ineffective. The results the 125 ppm formulations are shown in parentheses in the table.

From these results, it is apparent that the aqueous solution of the compositions of the present invention have higher insecticidal activities than ordinarily used pesticidal solution and known coated agricultural chemical according to U.S. Patent No. 5,123,950. In particular, as compared with other pesticides, it is apparent that remarkable results were obtained by the pesticidal compositions of Examples 1 to 13 for insecticidal rate (%) against Myzus persicae; by the pesticidal compositions of Examples 1, 4, 6, 8, 10 and 11 for miticidal rate (%) against Panonychus citri MGregor; and by the pesticidal composition of Examples 1, 4, 6, 11, and 13 for inhibitory activity against Icerya purchst Maskell. The results are summarized in Table 3.

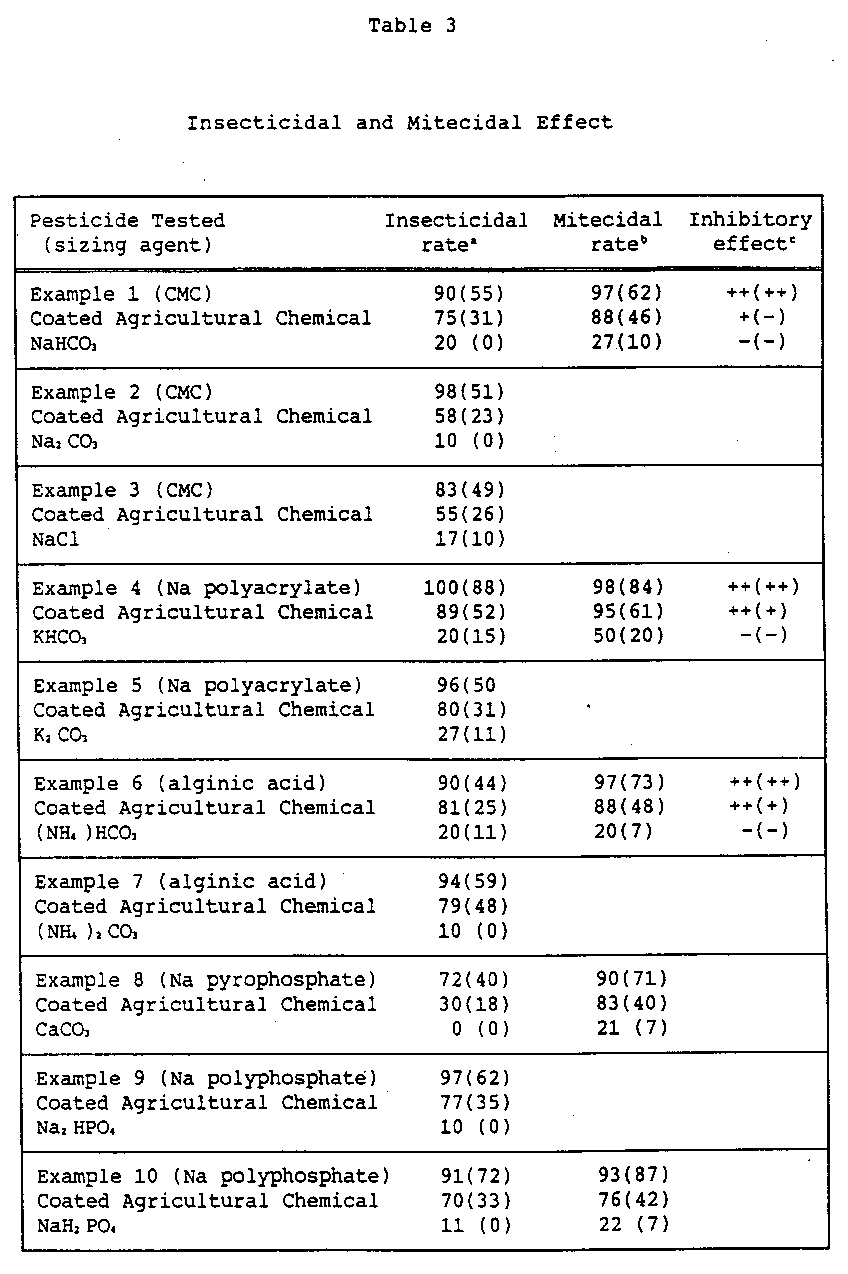

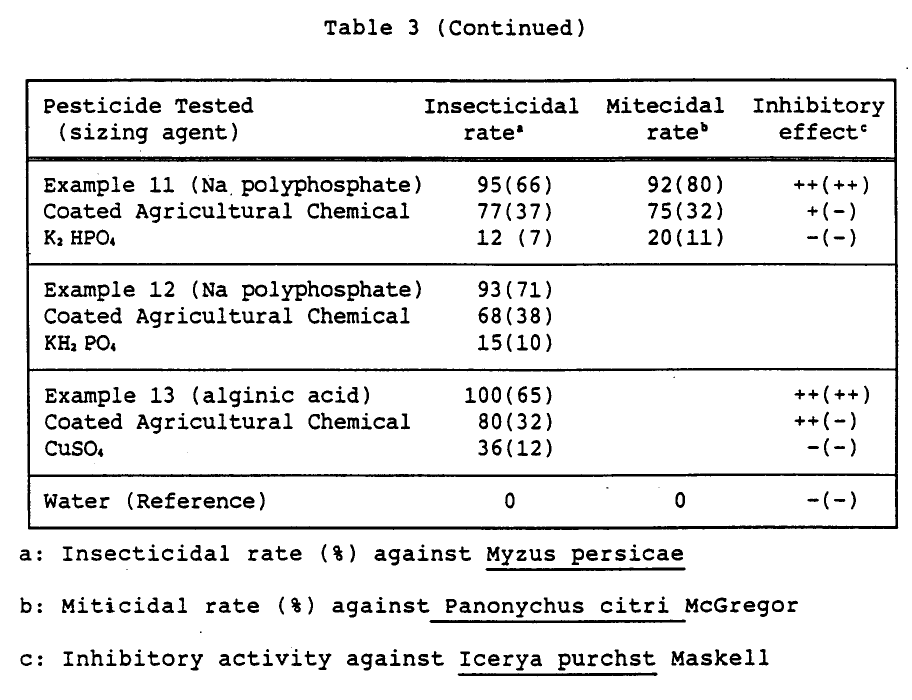

## Claims

1. A pesticidal composition which comprises a coated pesticide comprising:
100 parts by weight of an active pesticidal ingredient coated with
0.1 to 10 parts by weight of one or more ingredients selected from the group consisting of aliphatic acid esters of aliphatic polyols, phospholipids, and the mixtures thereof, and 0.01 to 10 parts by weight of a sizing agent selected from the group consisting of carboxymethylcellulose, polyvinylalcohol, alginic acid, sodium alginate, sodium polyacrylate, sodium pyrophosphate, esters of polyacrylic acid, sodium polyphosphate, potassium polyphosphate, sodium metaphosphate, and mixtures thereof.

2. The pesticidal composition according to claim 1, wherein the aliphatic acid ester of aliphatic polyol is selected from the group consisting of sorbitan monolaurate, sorbitan monostearate, glycerin laurate, glycerin monocaprylate, glycerin monooleate, glycerin monooctoate, glycerin mono-soyabean oil fatty acid ester, triglycerin monooleate, glycerin monopalmitate, and polyglycerin fatty acid esters, polyoxyethylene-alkylphenylether, polyoxyethylene-nonylphenylether, lauryl dihydroxyethylamine, and mixtures thereof.

3. The pesticidal composition according to claim 1, wherein the phospholipid is selected from the group consisting of purified lecithin, phosphatidylethanolamine, phosphatidylinositol, and mixtures thereof.

4. A method for applying a pesticide comprising the step of adding 0.01 to 10 parts by weight of a sizing agent selected from the group consisting of aliphatic acid esters of aliphatic polyols, phospholipids, and the mixtures thereof, and 0.01 to 10 parts by weight of a sizing agent selected from the group consisting of carboxymethylcellulose, polyvinylalcohol, alginic acid, sodium alginate, sodium polyacrylate, sodium pyrophosphate, esters of polyacrylic acid, sodium polyphosphate, potassium polyphosphate, sodium metaphosphate, and mixtures thereof to a coated pesticide comprising 100 parts by weight of an active pesticidal ingredient coated with 0.1 to 10 parts by weight of one or more ingredients selected from the group consisting of aliphatic acid esters of aliphatic polyols, phospholipids, or a mixture thereof, and spraying the resulting mixture.

## Patentansprüche

1. Pestizid-Zusammensetzung, umfassend ein beschichtetes Pestizid, umfassend:
100 Gew.-Teile eines aktiven Pestizid-Bestandteils, beschichtet mit
0,1 bis 10 Gew.-Teilen eines oder mehrerer Bestandteile, ausgewählt aus der Gruppe bestehend aus Estern aliphatischer Säuren mit aliphatischen Polyolen, Phospholipiden und deren Mischungen, und 0,01 bis 10 Gew.-Teilen eines Schlichtemittels, ausgewählt aus der Gruppe bestehend aus Carboxymethylcellulose, Polyvinylalkohol, Alginsäure, Natriumalginat, Natriumpolyacrylat, Natriumpyrophosphat, Estern von Polyacrylsäure, Natriumpolyphosphat, Kaliumpolyphosphat, Natriummetaphosphat und deren Mischungen.

2. Pestizid-Zusammensetzung nach Anspruch 1, wobei der Ester der aliphatischen Säure mit einem aliphatischen Polyol aus der aus Sorbitanmonolaurat, Sorbitanmonostearat, Glycerinlaurat, Glycerinmonocaprylat, Glycerinmonooleat, Glycerinmonooctoat, Glycerinmono-Sojabohnen-Fettsäureester, Triglycerinmonooleat, Glycerinmonopalmitat und Polyglycerinfettsäureestern, Polyoxyethylenalkylphenylether, Polyoxyethylennonylphenylether, Lauryldihydroxyethylamin bestehenden Gruppe und deren Mischungen ausgewählt ist.

3. Pestizid-Zusammensetzung nach Anspruch 1, wobei das Phospholipid aus der aus gereinigtem Lecithin, Phosphatidylethanolamin, Phosphatidylinositoi bestehenden Gruppe und deren Mischungen ausgewählt ist.

4. Verfahren zum Auftragen eines Pestizids, umfassend den Schritt des Zugebens von 0,01 bis 10 Gew.-Teilen eines Schlichtemittels, ausgewählt aus der Gruppe bestehend aus Estern aliphatischer Säuren mit aliphatischen Polyolen, Phospholipiden und deren Mischungen und 0,01 bis 10 Gew.-Teilen eines Schlichtemittels, ausgewählt aus der Gruppe bestehend aus Carboxymethylcellulose, Polyvinylalkohol, Alginsäure, Natriumalginat, Natriumpolyacrylat, Natriumpyrophosphat, Estern von Polyacrylsäure, Natriumpolyphosphat, Kaliumpolyphosphat, Natriummetaphosphat und deren Mischungen zu einem beschichteten, 100 Gew.-Teile eines aktiven Pestizid-Bestandteils umfassenden Pestizids, beschichtet mit 0,1 bis 10 Gew.-Teilen eines oder mehrerer Bestandteile, ausgewählt aus der Gruppe bestehend aus Estern aliphatischer Säuren mit aliphatischen Polyolen, Phospholipiden oder einer Mischung davon, und das Sprühen der resultierenden Mischung.

## Revendications

1. Composition pesticide qui comprend un pesticide enrobé comprenant :
100 parties en poids d'un ingrédient pesticide actif enrobé par
0,1 à 10 parties en poids d'un ou plusieurs ingrédients choisis dans le groupe constitué par les esters d'acides aliphatiques de polyols aliphatiques, les phospholipides, et les mélanges de ceux-ci et 0,01 à 10 parties en poids d'un agent d'apprêt choisi dans le groupe constitué par la carboxyméthylcellulose, l'alcool polyvinylique, l'acide alginique, l'alginate de sodium, le polyacrylate de sodium, le pyrophosphate de sodium, les esters d'acide polyacrylique, le polyphosphate de sodium, le polyphosphate de potassium, le métaphosphate de sodium, et les mélanges de ceux-ci.

2. Composition pesticide selon la revendication 1, dans laquelle l'ester d'acide aliphatique de polyol aliphatique est choisi dans le groupe constitué par le monolaurate de sorbitan, le monostéarate de sorbitan, le laurate de glycérine, le monocaprylate de glycérine, le monooléate de glycérine, le monooctoate de glycérine, le mono-ester d'acide gras d'huile de soja et de glycérine, le monooléate de triglycérine, le monopalmitate de glycérine et les esters d'acides gras de. polyglycérine, de polyoxyéthylènealkylphényléter, de polyoxyéthylène-nonylphényléter, de lauryldihydroxyéthylamine et les mélanges de ceux-ci.

3. Composition pesticide selon la revendication 1 dans laquelle le phospholipide est choisi dans le groupe constitué par la lécithine purifiée, la phosphatidyléthanolamine, le phosphatidylinositol, et les mélanges de ceux-ci.

4. Procédé d'application d'un pesticide comprenant l'étape consistant à ajouter 0,01 à 10 parties en poids d'un agent d'apprêt choisi dans le groupe constitué par les esters d'acides aliphatiques de polyols aliphatiques, les phospholipides et les mélanges de ceux-ci, et 0,01 à 10 parties en poids d'un agent d'apprêt choisi dans le groupe constitué par la carboxyméthylcellulose, l'alcool polyvinylique, l'acide alginique, l'alginate de sodium, le polyacrylate de sodium, le pyrophosphate de sodium, les esters de l'acide polyacrylique, le polyphosphate de sodium, le polyphosphate de potassium, le métaphosphate de sodium et les mélanges de ceux-ci, à un pesticide enrobé comprenant 100 parties en poids d'un ingrédient pesticide actif enrobé par 0,1 à 10 parties en poids d'un ou plusieurs ingrédients choisis dans le groupe constitué par les esters d'acides aliphatiques de polyols aliphatiques, les phospholipides ou les mélanges de ceux-ci et à pulvériser le mélange résultant.
